# EUROPEAN PATENT APPLICATION

(11) **EP 4 570 841 A1**
(43) Date of publication of application: **18.06.2025**
(21) Application number: 24203150.8
(22) Date of filing: 27.09.2024
(51) Int. Cl.: C08G 18/40, C08K 3/00, C08G 18/70, C08K 3/013, C08K 3/016, C08L 75/04, E04F 15/10

(54) **BIOBASED CAST POLYMER FLOOR COMPOSITION**

(30) Priority: 15.12.2023 NL 2036546
(71) Applicant: Bolidt Maatschappij tot Exploitatie van Kunststoffen en Bouwwerken B.V., 3341 LJ Hendrik-Ido-Ambacht (NL)
(72) Inventor: Bol, Rientz Willem, 3341 LJ HENDRIK-IDO-AMBACHT (NL)
(74) Representative: Arnold & Siedsma

(57) **Abstract**

The present invention relates to a biobased cast polymer floor composition comprised of a polymer and a biological flame-retardant filler. The present invention further relates to a polymer floor comprised of a cast polymer floor composition and use of the cast polymer floor composition for providing a heat resistant cast polymer floor.

## Description

The present invention relates to a biobased cast polymer floor composition comprised of a polymer and a biological flame-retardant filler. The present invention further relates to a polymer floor comprised of a cast polymer floor composition and use of the cast polymer floor composition for providing a heat resistant cast polymer floor.

Cast polymer floors, also known as resinous flooring or epoxy flooring, are usually made from synthetic materials, primarily epoxy resins and polyurethane. These resins are derived from petrochemical non-renewable sources, having a high carbon footprint. Polymer casting floor composition in general are comprised of polyisocyanates, polyols and/or polyurethane and may further require a wide variety of other chemicals to control the material properties and polymerisation reaction to provide and maintain the desired properties, for example fire resistance, in the final product. Furthermore, additional properties can be added to the polymer by using fillers, flame-retardants, and smoke suppressants. The fire safety requirements of polymer-based casting floors, for example comprised of polyurethane materials are usually tested and assessed based on laboratory tests that examine flame spread and smoke density and production of harmful substances such as NOx. One goal is to provide the floor with fire resistance, i.e., low smoke density, low emissions of harmful materials and limited flame spread.

For safety reasons the polymer casting floor compositions are usually made flame-retardant by using flame-retardant fillers. Flame-retardant fillers are materials added to the polymer blend to reduce their flammability and meet fire safety standards of the cast floor. These fillers are often inorganic compounds or synthetic chemicals designed to resist combustion and slow down the spread of flames. Often bromine- or chlorine-containing additives or alcohol components are also used. Examples of this are hexachloromethylenetetrahydrophthalic acid (HET acid), tetrabromophthalic acid or dibromoneopentyl glycol. With halogens, fire resistance is obtained by splitting off the halogen atom as a radical that then reacts with the free radicals that promote fire within the combustion process. In this way the "fuel" is removed from the seat of the fire and the fire is controlled. A disadvantage of such halogen (F, Cl, Br and I) containing resins is that a fire results in the formation of corrosive and toxic gases that can lead to significant damage and pose a health risk. Furthermore, the use of halogen-containing flame-retardants is considered objectionable due to the toxicity of the chemicals themselves. Brominated flame-retardants in particular have been targeted for scrutiny and bans. Other examples of inorganic flame-retardant fillers include compounds like alumina trihydrate (ATH), magnesium hydroxide (MDH), and various phosphorus-based compounds. These materials are not derived from renewable or biobased sources; they are usually mined or chemically synthesized.

Considering the above, there is a need in the art for a polymer casting floor compositions having improved fire-resistant properties, i.e. providing low smoke formation, low emissions of harmful substances and have a limiting effect on the spread of flame in the event that the floor is exposed to fire. A further object of the present to provide for a flame-resistant polymer casting floor compositions having a reduced carbon footprint, is low cost based on renewable resources and provides a fire-retardant/fire-resistant floor that does not compromise on the aesthetic and material properties of the floor.

It is an object of the present invention, amongst other objects, to address the above need in the art. The object of present invention, amongst other objects, is met by the present invention as outlined in the appended claims.

Specifically, the above object, amongst other objects, is met, according to a first aspect, by the present invention by a cast polymer floor composition wherein the polymer composition is comprised of a polymer selected from the group consisting of polyurethane, epoxy, acrylate and a polymer obtained via Micheal addition, preferably polyurethane, wherein the cast floor polymer composition comprises between 2 to 50 wt%, preferably 3.5 to 35 wt%, more preferably 7.5 to 25 wt%, most preferably 10 to 20 wt% of plant-derived biological flame-retardant filler, and wherein said biological flame-retardant filler has a moisture content of at most 4.4 wt%, more preferably at most 2 wt%, even more preferably at most 1 wt%, most preferably is free of moist. Wherein the polymer is preferably obtained via Micheal reaction (Michael addition), including Real-, Aza-, Oxa, or Thio Michael addition, preferably Real Michael addition.

Surprisingly, the cast polymer floor composition of present invention provided a cast polymer floor, when fully cured, having improved fire-resistant properties in respect to reduced smoke formation and low emissions of harmful substances such as NOx, HCl, HBr and SO₂. The composition provided a limiting effect on the spread of flame as the result of reduced heat development and heat release when exposed to fire. Finally, the cast polymer floor composition provided a floor that was mechanically of identical if not superior quality in comparison to equivalent non-biobased casting floors. Due to the inclusion and preferably in part replacement of the non-biobased flame-retardant compounds with the plant-derived biological flame-retardant filler, the product has a reduced carbon footprint. For example, a filler that is often used in cast polymer floors is kaolin and is 0% biobased and therefore has 0% C14, which are carbons that originate from renewable descent. The plant-derived biological flame-retardant filler is 100% biobased so 100% of carbon is the C14 bioderived carbon. The percentage of renewable or biobased materials in the polymer cast polymer floor can be determined by the age of the organic material. Carbon that has an age of between 0 to 10 can be considered as "young" carbon that is derived from renewable plant based materials, with a C14-activity of about 100%. On the other side "old" carbon (millions of years of age) is of fossil origin with a C14 activity of about 0%. The biobased filler is plant derived, which is readily available, renewable, and low cost and provides a fire-retardant/fire-resistant, biobased floor that does not compromise on the aesthetic and material properties of the floor.

The plant-derived biological flame-retardant filler, such as dry sugar beet pulp, is a natural fibrous material, which contains cellulose, hemicellulose, and pectin, which contributes to char formation when heated in case of a fire. The incorporation of plant-derived biological flame-retardant fillers enhance the formation of a carbonaceous char layer during a fire event in the cast polymer floor. This char layer acts as a physical barrier, reducing heat transfer and limiting the access of oxygen to the material. It enhances the fire retardancy of the polyurethane formulation by providing insulation and preventing further flame propagation. Secondly, the inclusion of plant-derived biological flame-retardant fillers result in a reduction in combustible gases in comparison to known cast polymer floors, in case of a fire. The biobased plant derived fillers used in the composition of present invention, through its decomposition, release gases such as carbon dioxide and water vapor. These gases can dilute the concentration of combustible gases in the surrounding environment, potentially reducing the flammability and fire spread. Third, plant-derived biological flame-retardant fillers absorb heat from the surrounding environment during decomposition. This is due endothermic reactions involving the breakdown of cellulose, hemicellulose, and pectin, and residual moisture present in the plant-based material that can absorb heat as it evaporates. Finally, the plant-derived biological flame-retardant fillers are efficient smoke suppressors. The carbonaceous char formed during combustion can encapsulate volatile compounds and trap smoke particles, reducing smoke production and contributes to minimize smoke emission and the release of harmful gases, improving the overall fire safety profile of the cast polymer floor. If the concentration of the plant-derived biological flame-retardant filler is too high (>50%) the composition becomes too viscous and unsuitable as a cast polymer floor composition, negatively affecting the levelling after casting, providing a suboptimal finished cast floor. If too little (<2%) of the plant-derived biological flame-retardant filler is used the flame retardant effect is drastically reduced, as well as the flooring becoming less biobased since the percentage of biological materials included decreases.

Suitable biobased flame-retardants used in the polymer cast floor composition of present invention preferably do not chemically react with the polymer in the, for example the plant derived flame-retardant must not react with the isocyanate. The plant-derived biological flame-retardant filler preferably does not contain reactive hydroxyl (OH) or amino (NH₂) because these react with the isocyanate. However, it may be possible that these groups are shielded by steric hindrance and therefore do not or hardly react. Various biobased fillers have been tested for their use as flame-retardant in polymer floor casting compositions, such as wastewater sludge, lignin, cork and olive stone powder. However the sludge, lignin and cork all absorbed the catalyst needed in the floor casting polymer composition to obtain a cured final product. This meant that the processing time to obtain the final product, i.e. the cured polymer floor after casting, was too long and the intended material properties were not achieved. The olive stone powder did not interact with the catalyst but contained too much moisture causing it to react with the isocyanate causing foam and incomplete cross-linking.

Surprisingly, a biobased plant-derived flame-retardant filler, such as derived from sugar beet did not result in the above drawbacks and provided an optimal polymer floor casting composition while maintaining the mechanical properties and providing the desired flame-retardant properties. In the polymer floor casting composition, conventional chemical fillers can be replaced in the cast floor systems with the biobased plant-derived biological flame-retardant filler, providing a greener cast floor system having a reduced carbon footprint, while maintaining the materials properties and providing an economic attractive alternative to the known flooring systems. The chemical resistance of a floor comprised of the polymer floor casting composition of present invention was equal to other known polymer floor casting compositions comprised of conventional fillers.

During testing the moist percentage of the plant-derived biological flame-retardant filler in the cast polymer floor composition was tested and it was observed that when the moist percentage is too high, the curing of the final floor product is insufficient. The residual water in the filler reacts with the isocyanate harder resulting in an incomplete curing and foam formation during curing. The plant-derived biological flame-retardant filler in polymer cast floor composition of present invention preferably has a low moisture content (i.e. below 4.4 wt%) because the water would again react with the isocyanate of the polymer composition, so that the polymer is not fully crosslinked and the desired material properties are not achieved.

According to yet another preferred embodiment, the present invention relates to the cast polymer floor composition wherein said biological flame-retardant filler is comprised of plant derived parenchymal cell wall material, preferably parenchymal cellulose and/or pectin. Parenchymal cell walls are the cell walls that surround and protect parenchyma cells in plants. Parenchyma cells are one of the three types of plant cells, with the other two being collenchyma and sclerenchyma cells. Each of these cell types has a specific function in plant structure and function. Parenchyma cells are often found in various parts of the plant, including the leaves, stems, roots, and fruits. They have relatively thin and flexible cell walls made primarily of cellulose, hemicellulose, and pectin, wherein the polysaccharides typically make up 90% or more of the parenchymal cell walls. These cell walls provide some structural support to the plant but are not as rigid as the cell walls of collenchyma or sclerenchyma cells in plants.

According to another preferred embodiment, the present invention relates to the cast polymer floor composition wherein said biological flame-retardant filler is comprised of between 60 to 90 wt%, more preferably 65 to 85 wt%, most preferably 70 to 80 wt% cellulose, based on the weight of the biological flame-retardant filler. Cellulose referred to herein includes hemi-cellulose, wherein the biological flame-retardant filler comprising cellulose, may comprise of between 15 to 40 wt.%, more preferably 15 to 35 wt.%, most preferably 15 to 30 wt.% of hemi-cellulose and 15 to 40 wt.%, more preferably 15 to 35 wt.%, most preferably 15 to 30 wt.% of cellulose.

According to a preferred embodiment, the present invention relates to the cast polymer floor composition wherein said biological flame-retardant filler is comprised of between 10 to 40 wt%, more preferably 15 to 35 wt%, most preferably 20 to 30 wt% pectin, based on the weight of the biological flame-retardant filler. The pectin comprise small recesses and cavities which provide for a capillary function which are large enough to be able to absorb water, but are too small to be able to absorb isocyanate. This prevents or reduces the effect of the residual water present in the plant-derived biological flame-retardant filler to react with the isocyanate of the polymer of the polymer floor casting compositions, preventing the production of CO₂ and foam formation during curing of the cast floor. In case less than 10 wt% pectin is present as part of the biological flame-retardant filler, the moisture is absorbed and captured less effective in the cast polymer floor composition, also resulting in unwanted occurrence of foaming during the production of the composition and its use for casting the polymer floor.

According to yet another preferred embodiment, the present invention relates to the cast polymer floor composition wherein said biological flame-retardant filler is a powder having a maximum particle size of at most 100 µm, preferably at most 85 µm, more preferably at most 70 µm, even more preferably at most 45 µm, more preferably at most 30 µm, most preferably at most 20 µm, even most preferably at most 15 µm. The particle size of the plant-derived biological flame-retardant filler used in the polymer floor casting composition of present invention greatly influences the material properties of the casting floor, such as increase flexibility. Furthermore, the storability of the polymer floor casting composition is affected when using a plant-derived biological flame-retardant filler having particles of more than 150 um, resulting in reduced storage stability of the composition. Plant-derived biological flame-retardant filler having a particle size of above 100 um, the particles where too large to sustain a homogenous suspension, sinking to the bottom and resulting in difficulties with mixing and in obtaining a homogenous suspension afterwards before use for floor casting. Also, when casting the polymer floor, the larger particles tend to stick together, providing a poor finish and floor construction. Results showed that when the particle size of the plant-derived biological flame-retardant filler is on average between 5 to 100 µm, preferably on average 15 to 85 µm more preferably on average 25 to 60 µm, the above drawbacks are reduced or even prevented.

According to another preferred embodiment, the present invention relates to the cast polymer floor composition wherein the biological flame-retardant filler has a density of between 1.3 g/cm³ to 1.7 g/cm³, preferably between 1.4 to 1.6 g/cm³, more preferably between 1.45 to 1.5 g/cm³. The density of the plant-derived biological flame-retardant filler is relatively low (about 40 to 60% lower) in comparison to other known fillers that are regularly used in polymer floor casting compositions, having an average density of between 1.5 g/cm3. The density of other well-known fillers, also used as flame-retardant additive, include talc (density of 2.7 g/cm3), Kaolin (2.6 g/cm3) or barium sulphate (Baryte, 4.2 g/cm3), calcium carbonate (2.7 g/cm3). Therefore, the polymer floor casting composition comprised of the plant-derived biological flame-retardant filler provides a final material having a reduced weight, which is preferred in the industry using casting floors, such as the ship building industry.

According to yet another preferred embodiment, the present invention relates to the cast polymer floor composition , wherein said plant-derived biological flame-retardant filler is derived from one or more plants selected from the group consisting of beet, chicory, tomato, potato, citrus fruits, pineapple, apple, cranberries, grapes, carrots, hemp, coconut, beer spent, grain spent, soybean, maize, rice, onion, pea, preferably beet and/or chicory. In view of the flame retardant properties, dry sugar beet pulp with its fibrous nature can help reduce the tendency of the polyurethane formulation to melt and drip during a fire. The fibrous structure can impede the flow and dripping of molten material, thereby minimizing the potential for fire spread and reducing the risk of injury or damage caused by dripping.

According to a preferred embodiment, the present invention relates to the cast polymer floor composition wherein said plant-derived biological flame-retardant filler is derived from sugar beet (*Beta vulgaris subsp. vulgaris*). Sugar beet pulp consists mainly of primary cell walls comprised of parenchymal cellulose that are rich in pectin. Furthermore, the demand for sugar worldwide is high, resulting is high availability of sugar extracted from sugar beets, providing a filler composition that is abundantly available, relatively cheap and fully biological in comparison to other flame-retardant compounds being used in polymer flooring compositions.

According to another preferred embodiment, the present invention relates to the cast polymer floor composition wherein the cast polymer floor composition furthermore comprises between 1 and 40 wt%, preferably 2 to 30 wt%, more preferably 5 to 25 wt% of one or more non-biological flame retarder selected from the group consisting of magnesium hydroxide, aluminium trihydrate (ATH), talc, organic phosphinates, melamine poly(metal phosphate) and phosphate ester plasticizer. Experiments show that when combining the plant-derived biological flame-retardant filler with conventional non-biological flame retarders, the flame-retardant effect is synergistically enhanced including reduced thermal degradation. The combination of magnesium hydroxide, ATH, and/or talc, have a synergistic effects on the thermal degradation of both the polyurethane matrix and the plant dry sugar beet pulp powder. These additives can collectively contribute to char formation, insulation, and the release of fire-suppressing gases, leading to enhanced fire retardancy. Organic phosphinates and phosphate ester plasticizer can release phosphorus radicals, which can react with the char forming agents in the plant-derived biological flame-retardant filler, leading to the formation of a more stable and cohesive char layer. This char layer further improves fire resistance and reduces the tendency for melt dripping and provides enhanced insulation properties, reducing heat transfer and delaying ignition of the underlying material. Magnesium hydroxide, or ATH releases water vapor when exposed to heat, which helps cool down the material and dilute the concentration of flammable gases. The combination of ATH with the biobased plant derived material can enhance the overall cooling effect and the dilution of flammable gases, reducing the likelihood of ignition and flame spread.

According to a preferred embodiment, the present invention relates to the cast polymer floor composition, wherein the polymer is a polyurethane that comprises at least one polyol and at least one polyisocyanate selected from the group consisting of diphenylmethane diisocyanate (MDI), toluene diisocyanate (TDI), hexamethylene diisocyanate (HDI), pentamethylene diisocyanate (PDI) or isophorone diisocyanate (IPDI).

According to yet another preferred embodiment, the present invention relates to the cast polymer floor composition, wherein said plant-derived biological flame-retardant filler is free of additives or other chemicals.

According to another preferred embodiment, the present invention relates to the cast polymer floor composition, wherein said plant-derived biological flame-retardant filler is 100% biodegradable.

The present invention, according to a second aspect, relates to a cast polymer floor comprised of a cast polymer floor composition of present invention. The cast polymer floor is highly flame resistant; the total amount of heat released (Qt) was significantly reduced in comparison to the cast floor polymer composition without the plant-derived biological flame-retardant filler, i.e. 1.3 MJ to 1.8 MJ respectively. Also the smoke density being generated is reduced in the cast floor polymer composition comprising the plant-derived biological flame-retardant filler, which is well under the prescribed limit of 500 Ds.

According to a preferred embodiment, the present invention relates to the cast polymer floor wherein the polymer floor is fire resistant having an average smoke density (Ds) of less than 500, preferably a Ds of less than 480, more preferably a Ds of less than 450, as determined according to the International Maritime Organization code IMO 2010 FTP Code part 2.

According to another preferred embodiment, the present invention relates to the cast polymer floor wherein the polymer floor has a tensile strength of at least 1.5 MPa, preferably at least 1.6 MPa, as determined according to ISO 527. The tensile strength of a floor comprised of the polymer floor casting composition of present invention was greatly improved in comparison to other known polymer floor casting compositions comprised of conventional fillers. Experiments showed a significant increasing in tensile strength of about 40% in comparison to a polymer floor casting composition comprised of calcium carbonate as filler instead of the biobased plant-derived biological flame-retardant filler. Furthermore, in comparison to conventional polymer cast floors comprising flame-retardant fillers, the cast polymer floor of present invention comprises less of filler to be used in the cast polymer floor providing a cheaper and more lightweight material having comparable tensile strength properties. The look and feel are comparable between the tested cast polymer floors.

According to another preferred embodiment, the present invention relates to the cast polymer floor wherein the polymer floor is comprised of at least 5 wt%, preferably at least 15wt%, more preferably at least 25 wt%, even more preferably at least 40%, most preferably at least 80% of biobased materials. The cast polymer floor aims to have a reduced carbon footprint and increased biobased composition, reducing the synthetic and chemical components.

The present invention, according to a further aspect, relates to the use of a cast polymer floor composition for providing a heat resistant cast polymer floor.

The present invention will be further detailed in the following examples;

### Examples

### Example 1 - preparation cast polymer floor composition

A polyol resin blend (~29 wt%) was mixed with additives including a polymeric dispersant (0,5 wt%), defoamer (0,5 wt%), hindered amine light stabilizer (HALS) (0,5 wt%), moisture scavenger additive (6,5 wt%) and catalyst (0,02 wt%), pigment paste (~6 wt%) and fillers including conventional flame retardants including; aluminium hydroxide (21%), organic phosphinates (6%), talc (6%), melamine poly(metal phosphate) (3%) and phosphate ester plasticizer (3%). This mixture is cured by mixing it with polyisocyanate hardener (~18 wt%), based on total weight of the cast floor polymer composition.

Two types of cast floor polymer composition were prepared, type A comprised of only the conventional fillers, and type B comprised of identical composition as type A however replacing next part of the conventional fillers with a ~3.6 wt% of the plant-derived biological flame-retardant filler, based on the total weight of the cast floor polymer composition. The plant-derived biological flame-retardant filler has a maximum particle size of 56 µm and a moisture content of about 2.5 wt%.

### Example 2 - mechanical properties cast polymer floor

The tensile strength and Young's modulus was determined according to ISO 527 of cast polymer floors consisting of polyol resin mixed and one type of filler, being either a mineral filler or the plant-derived biological flame-retardant filler. In this example the conventional mineral filler (Kaolin or CaCO₃) was replaced with the plant-derived biological flame-retardant filler to compare the mechanical properties of the resulting casted polymer floor and the tensile strength was determined after 1 week, after 4 weeks and after 12 weeks, see table 1.

**Table 1. Tensile strength after 1 to 10 weeks**

| **Filler type** | **Tensile strength (MPa), 1w** | **Tensile strength (MPa), 4w** | **Tensile strength (MPa), 12w** |
|---|---|---|---|
| Kaolin (13,7 wt%) | 1.5 | 1.7 | 1.7 |
| CaCO₃ (14.1 wt %) | 0.9 | 1.1 | 1.1 |
| plant-derived bio filler (8.4 wt%) | 1.4 | 1.5 | 1.4 |
| plant-derived bio filler (13,7 wt%) | 1.6 | 1.8 | 2.0 |

In comparison to a material comprising Kaolin filler, less of filler (decreased weight) can be used per volume of the cast polymer floor providing a cheaper and more lightweight material having comparable tensile strength properties. The look and feel are comparable between the tested cast polymer floors.

Furthermore, the effect of the particle size of the biological flame-retardant in the floor polymer composition was examined in view of the flexibility of the floor by determining the Young modulus. The tested particle sizes of the biological flame retardant in cast floor polymer composition was on average 16.6 µm and 13 µm and compared to the cast floor polymer composition comprised of Kaolin. The young's modulus of the Kaolin based floor was 7.9, whereas the floor comprised of the cast floor polymer composition comprising the biological flame retardant 16,6 µm or 13 µm, both had a considerably lower Young's modulus of 7.0. The inclusion of the biological flame retardant improves the flexibility of the material, and it also seems that the smaller particle sizes result in an increased flexibility of the material, while maintaining tensile strength.

### Example 3 - smoke and toxicity test polymer floor composition

The two samples of example 1 are tested for their fire retardant/resistant properties. Smoke and toxicity tests are performed on 2 mm thick test samples of the cured polymer floors, according to the International Maritime Organization code IMO 2010 FTP Code part 2 and part 5. These methods are used to evaluate how much smoke is generated when a product is exposed to a particular radiation and flame. FTP Code Part 2 relates to the smoke and toxicity testing. Part 5 evaluates a material's ability to withstand a fire spreading along its surface.

The test is conducted in a sealed chamber. The test sample is placed horizontally and subjected to thermal radiance. When the specimen is subjected to radiation the material starts to emit smoke which is collected in the chamber. The smokes specific optical density or transparency is measured with a light source and a photocell. When doing the toxicity analysis, some of the produced smoke is taken out of the chamber for analysis. Analysis is performed for each of the three irradiance levels and amongst others the following substances can be detected through FTIR analysis: Carbon monoxide, Hydrochloric acid, Hydrogen bromide, Hydrogen fluoride, Hydrogen cyanide, Nitrous oxides and Sulphur dioxide, see Table 2.

For the classification criteria for smoke density (Dₛ) an average of the maximum of Dₛ should be within a Dₛ of 500 for materials used as the surface of bulkheads, linings, or ceilings and floor materials. Classification criteria for toxicity for the gas concentrations measured should be within the following limits: CO 1450 ppm, HCl 600 ppm, HBr 600 ppm, HF 600 ppm, HCN 140 ppm, NOₓ 350 ppm and SO₂ 200 ppm (IMO 2010 FTP Code part 2). Furthermore, the critical heat flow when extinguished (CFE), warmth for sustained burning (Q_{sb}), maximum heat release (Qₚ) and total amount of heat released (Qₜ) were measured (IMO 2010 FTP Code part 5).

**Table 2. Results smoke and toxicity test**

| | **Type B** | **Type A** |
|---|---|---|
| **CFE (kW/m²)** | 40.8 | 42.4 |
| **Q_{sb} (MJ/m²)** | 2.7 | 3.2 |
| **Qₜ (MJ)** | 1.3 | 1.8 |
| **Q_{b} (kW)** | 2.5 | 2.7 |
| **Smoke density @ 50kW (Dₛ)** | 444 | 598 |
| **CO (ppm)** | 269.04 | 265.25 |
| **HCl (ppm)** | 1.06 | 2.88 |
| **HF (ppm)** | 0.16 | 0.61 |
| **NOₓ (ppm)** | 54.20 | 49.48 |
| **HBr (ppm)** | 0 | 0 |
| **HCN (ppm)** | 35.81 | 33.79 |
| **SO₂ (ppm)** | 5.09 | 6.72 |

Results show that in case the cast floor polymer composition was prepared comprised of the plant-derived biological flame-retardant filler, the total amount of heat released (Qt) was significantly reduced in comparison to the cast floor polymer composition without the plant-derived biological flame-retardant filler, i.e., 1.3 MJ to 1.8 MJ respectively. Also, the smoke density being generated is reduced in the cast floor polymer composition comprising the plant-derived biological flame-retardant filler, which is well under the prescribed limit of 500 Ds.

## Claims

1. Cast polymer floor composition wherein the polymer composition is comprised of a polymer selected from the group consisting of polyurethane, epoxy, acrylate and a polymer obtained via Micheal addition, preferably polyurethane, wherein the composition comprises a plant-derived biological flame-retardant filler comprised of plant derived parenchymal cell wall material, preferably parenchymal cellulose and/or pectin, wherein the cast floor polymer composition comprises between between 2 to 50 wt%, preferably 3.5 to 35 wt%, more preferably 7.5 to 25 wt%, most preferably 10 to 20 wt% of plant-derived biological flame-retardant filler, and wherein said biological flame-retardant filler has a moisture content of at most 4.4 wt%, more preferably at most 2 wt%, even more preferably at most 1 wt%, most preferably is free of moist.

2. Cast polymer floor composition according to claim 1, wherein said biological flame-retardant filler is comprised of between 60 to 90 wt%, more preferably 65 to 85 wt%, most preferably 70 to 80 wt% cellulose, based on the weight of the biological flame-retardant filler, and/or wherein said biological flame-retardant filler is comprised of between 10 to 40 wt%, more preferably 15 to 35 wt%, most preferably 20 to 30 wt% pectine, based on the weight of the biological flame-retardant filler.

3. Cast polymer floor composition according to any one of the claims 1 to 4, wherein said biological flame-retardant filler is a powder having a maximum particle size of at most 100 µm, preferably at most 85 µm, more preferably at most 70 µm, even more preferably at most 45 µm, even more preferably at most 30 µm, most preferably at most 20 µm, even most preferably at most 15 µm.

4. Cast polymer floor composition according to any one of the claims 1 to 3, wherein the biological flame-retardant filler has a density of between 1.3 g/cm³ to 1.7 g/cm³, preferably between 1.4 to 1.6 g/cm³, more preferably between 1.45 to 1.5 g/cm³.

5. Cast polymer floor composition according to any one of the claims 1 to 4, wherein said plant-derived biological flame-retardant filler is derived from one or more plants selected from the group consisting of beet, chicory, tomato, potato, citrus fruits, pineapple, apple, cranberries, grapes, carrots, hemp, coconut, beer spent, grain spent, soybean, maize, rice, onion, pea, preferably beet, grain spent and/or chicory.

6. Cast polymer floor composition according to any one of the claims 1 to 5, wherein said plant-derived biological flame-retardant filler is derived from sugar beet (*Beta vulgaris subsp. vulgaris*).

7. Cast polymer floor composition according to any one of the claims 1 to 6, wherein the Cast polymer floor composition furthermore comprises between 1 and 40 wt%, preferably 2 to 30 wt%, more preferably 5 to 25 wt% of one or more non-biological flame retarder selected from the group consisting of magnesium hydroxide, aluminium trihydrate (ATH), talc, organic phosphinates, melamine poly(metal phosphate) and phosphate ester plasticizer.

8. Cast polymer floor composition according to any one of the claims 1 to 7, wherein the polymer is a polyisocyanurate that comprises at least one polyol and at least one polyisocyanate selected from the group consisting of diphenylmethane diisocyanate (MDI), toluene diisocyanate (TDI), hexamethylene diisocyanate (HDI), pentamethylene diisocyanate (PDI) or isophorone diisocyanate (IPDI).

9. Cast polymer floor composition according to any one of the claims 1 to 8, wherein said plant-derived biological flame-retardant filler is free of additives or other chemicals.

10. Cast polymer floor composition according to any one of the claims 1 to 9, wherein said plant-derived biological flame-retardant filler is a 100% biodegradable

11. Cast polymer floor comprised of a cast polymer floor composition according to any one of the claims 1 to 10.

12. Cast polymer floor according to claim 11, wherein the polymer floor is fire resistant having an average smoke density (Ds) of less than 500, preferably a Ds of less than 480, more preferably a Ds of less than 450, as determined according to the International Maritime Organization code IMO 2010 FTP Code part 2.

13. Cast polymer floor according to claim 11 or 12, wherein the polymer floor has a tensile strength of at least 1.5 MPa, preferably at least 1.6 MPa, as determined according to ISO 527.

14. Cast polymer floor according to any one of the claims 11 to 13, wherein the polymer floor is comprised of at least 5 wt%, preferably at least 15wt%, more preferably at least 25 wt%, even more preferably at least 40%, most preferably at least 80% of biobased materials.

15. Use of a cast polymer floor composition of any one of the claims 1 to 10 for providing a heat-resistant cast polymer floor.
